# FASCICULE DE BREVET EUROPEEN

(11) **EP 3 784 901 B1**
(45) Date de publication et mention de la délivrance du brevet: **09.02.2022**
(21) Numéro de dépôt: 19733839.5
(22) Date de dépôt: 25.04.2019
(51) Int. Cl.: F03C 1/34, F03C 1/40, F03C 1/047, F03C 1/053, B60K 7/00

(54) **AGENCEMENT HYDRAULIQUE POUR UNE ROUE DIRECTRICE D'UN VEHICULE**
HYDRAULISCHE ANORDNUNG FÜR EIN GELENKTES RAD EINES FAHRZEUGES
HYDRAULIC ARRANGEMENT FOR A STEERED WHEEL OF A VEHICLE

(30) Priorité: 25.04.2018 FR 1853625
(43) Date de publication de la demande: 03.03.2021
(73) Titulaire: Poclain Hydraulics Industrie, 60410 Verberie (FR)
(72) Inventeur: MICHON, Sylvain, 60410 Verberie (FR); PREDNY, Roman, 60410 Verberie (FR)
(74) Mandataire: Cabinet Beau de Loménie
(86) Numéro de dépôt international: PCT/FR2019/050971
(87) Numéro de publication internationale: WO 2019/207252

(56) Documents cités:
- EP-A1- 3 269 994
- FR-A1- 2 693 154
- FR-A1- 3 043 433
- GB-A- 2 269 207

## Description

Le présent exposé concerne un agencement hydraulique pour une roue directrice d'un véhicule, comprenant :
- une machine hydraulique qui comprend une partie de rotor configurée pour être raccordée à la roue directrice, une partie de stator qui présente deux enceintes principales ayant des ouvertures principales respectives situées dans une interface de réception, un ensemble de pistons coulissant dans des cylindres pour entraîner en rotation la partie de rotor, un distributeur de fluide configuré pour établir des liaisons sélectives entre les enceintes principales et les cylindres,
- un dispositif de pivot qui définit un axe de pivotement du stator, qui présente deux orifices externes principaux reliés à des ouvertures de raccordement respectives situées dans une interface de raccordement et qui est configuré pour être fixé à un support en étant relié au stator de la machine hydraulique de sorte que les interfaces de réception et de raccordement coopèrent en reliant les ouvertures principales respectives et les ouvertures de raccordement respectives.

Un agencement de ce type est connu par le brevet FR 2 693 154.

Ce brevet décrit un agencement moteur pour une roue hydraulique motrice d'un véhicule, dans lequel le dispositif de pivot comporte un dispositif de joint tournant interposé entre la machine hydraulique (en l'espèce un moteur hydraulique) à laquelle la roue est attelée et le support, par exemple le bâti d'un véhicule. Grâce à ce joint tournant, les orifices externes principaux du dispositif de pivot sont fixes en rotation, et les conduites qui y sont raccordées ne sont donc pas affectées par la rotation du moteur autour de l'axe de pivotement du stator. Ceci concerne les orifices principaux nécessaires au fonctionnement de la machine, en particulier l'alimentation et l'échappement en fluide hydraulique.

Il est par ailleurs connu qu'une machine hydraulique puisse comprendre un ou plusieurs composants nécessitant un pilotage hydraulique. Un tel composant peut par exemple être un sélecteur de cylindrée, ou bien un organe de freinage ou de défreinage, ou bien de manière générale, tout composant devant être déplacé par pilotage entre au moins deux positions ayant une influence sur le mode de fonctionnement de la machine. Par exemple, la machine peut comporter deux cylindrées de fonctionnement, voire davantage. A cet effet, un ou plusieurs raccords de commande d'un sélecteur de cylindrée peuvent être prévus. Le sélecteur de cylindrée peut en particulier être une électrovalve, pilotée électriquement par des raccords électriques. Le sélecteur de cylindrée peut alternativement être un sélecteur hydraulique, auquel cas les raccords sont des raccords de pilotage hydraulique.

Classiquement, le sélecteur de cylindrée est prévu à l'intérieur de la machine hydraulique, et pivote donc avec elle autour de l'axe de pivotement du stator. Ainsi, les raccords de sélection de la cylindrée, qu'ils soient hydrauliques ou électriques, sont des flexibles qui accompagnent ce pivotement. Cependant, de tels flexibles peuvent être fragilisés et peuvent être endommagés au cours de l'usage de la machine ou du véhicule équipé de la roue directrice, en particulier lorsqu'il s'agit d'un engin de chantier ou d'un véhicule agricole.

Le même problème se pose avec un composant autre qu'un sélecteur de cylindré, par exemple un organe de freinage ou de défreinage tel qu'un piston, un disque ou un crabot.

Le présent exposé vise à remédier au moins substantiellement aux inconvénients précités.

Ainsi, l'exposé concerne un agencement hydraulique pour une roue directrice d'un véhicule selon la revendication 1.

Selon le présent exposé, la conduite de pilotage est formée dans le dispositif de pivot et ne risque donc pas d'être endommagée du fait de l'environnement extérieur au dispositif. La commande de pilotage est transmise au sélecteur de cylindrée par la coopération de l'interface de raccordement et de l'interface de réception. Le raccord externe de pilotage est relié à l'orifice externe de pilotage que présente le dispositif de pivot, c'est-à-dire qu'il est situé dans une partie statique vis-à-vis du pivotement autour de l'axe de pivot. Comme indiqué, la conduite de pilotage et la chambre de pilotage peuvent servir au pilotage d'un composant hydraulique, en particulier un sélecteur de cylindrée ou un organe de freinage ou de défreinage.

Optionnellement, la machine comprend un sélecteur de cylindrée apte à être commandé via la chambre de pilotage entre au moins deux configurations de cylindrées différentes dans lesquelles les liaisons établies par le distributeur de fluide diffèrent.

Dans ce cas, le composant sur lequel agit le pilotage est un sélecteur de cylindrée. Cependant, ce composant peut être différent, par exemple un organe de freinage ou de défreinage. Plusieurs composants, ayant chacun son pilotage respectif, réalisé par une conduite de pilotage et une chambre de pilotage dédiées et réalisées selon le présent exposé, peuvent coexister.

Optionnellement, le dispositif de pivot comprend un carter qui présente les orifices externes principaux et de pilotage et un noyau, qui est disposé dans le carter, le carter et le noyau coopérant pour définir des conduits de liaison respectifs entre les orifices externes principaux et les ouvertures de raccordement.

Le carter et le noyau peuvent être statiques vis-à-vis du pivotement autour de l'axe de pivotement du stator. Le noyau peut être emboité dans une cavité externe du carter, le noyau et le carter étant convenablement configurés pour définir entre eux les conduits de liaison respectifs.

Par exemple, les conduits de liaison peuvent être concentriques et parallèles à l'axe de pivotement du stator.

Ceci permet de réaliser ces conduits avec des sections de passage de fluide suffisamment importantes pour la circulation du fluide d'alimentation et d'échappement de la machine hydraulique, tout en adoptant une configuration simple et compacte.

Optionnellement, la conduite de pilotage est formée dans la paroi du carter et l'ouverture de pilotage est située dans une surface dudit carter dans l'interface de raccordement.

S'agissant du pilotage d'un composant du type précité, la conduite de pilotage peut n'avoir qu'une faible section, dans la mesure où la pression de pilotage peut être relativement réduite. Ainsi, on peut bénéficier de l'épaisseur de la paroi du carter pour réaliser cette conduite par perçage, tout en conservant une géométrie généralement symétrique autour de l'axe de pivotement du stator, pour le noyau.

Optionnellement, la conduite de pilotage est formée dans une partie du noyau.

Comme indiqué, le carter et le noyau peuvent coopérer pour définir des conduits de liaisons et ces derniers peuvent éventuellement être concentriques. Notamment, le noyau peut comprendre un ensemble de tubes concentriques, auquel cas les conduits de liaison peuvent être formés entre les tubes ou dans le tube le plus interne. On peut par exemple ajouter un tube interne de faible section à l'intérieur du conduit de liaison le plus interne pour, tout en conservant à ce conduit de liaison un section de passage adéquate, ajouter la conduite de pilotage à l'intérieur. On peut également réaliser la conduite en pilotage à l'intérieur ou, respectivement à l'extérieur d'un autre tube du noyau, dont l'épaisseur peut être faible. Dans ce cas, la conduite de pilotage comprend l'espace radial ménagé entre la périphérie interne, ou respectivement externe, de cet autre tube et l'élément (tube ou paroi du carter) qui lui est adjacent.

Optionnellement, l'ouverture de pilotage est située dans une gorge, s'étendant selon au moins une portion d'anneau et située dans l'interface de raccordement.

Cette gorge peut en particulier s'étendre sur une plage angulaire correspondant au débattement angulaire de pivotement de la machine hydraulique par rapport au dispositif de pivot, de manière à permettre avec une configuration simple que, quelle que soit la position angulaire de la machine hydraulique par rapport au dispositif de pivot dans la plage de débattement prévue, l'ouverture de pilotage soit reliée à cette gorge.

Optionnellement, l'entrée de pilotage est située dans un étagement de l'interface de réception.

Optionnellement, la chambre de pilotage est reliée à l'entrée de pilotage par une conduite de liaison de pilotage ménagée dans le stator.

Optionnellement, la conduite de pilotage comprend un tronçon axial sensiblement parallèle à l'axe de pivotement du stator, ledit tronçon axial étant optionnellement formé par un perçage traversant bouché à son extrémité opposée à l'interface de raccordement par un bouchon rapporté.

Optionnellement, le sélecteur de cylindrée comprend un tiroir mobile dans un alésage de la partie de stator, avec lequel communique la chambre de pilotage, ce tiroir étant configuré pour être déplacé dans un premier sens lorsque la pression dans la chambre de pilotage augmente à l'encontre d'un moyen de rappel, sollicitant le tiroir en sens opposé.

Optionnellement, le tiroir est disposé dans le distributeur de fluide et, optionnellement, l'axe de translation du tiroir coïncide avec l'axe de rotation de la partie de rotor de la machine hydraulique.

Optionnellement, le tiroir est disposé dans une partie de carter de la machine hydraulique, en particulier une partie (« couvercle de distribution ») qui entoure au moins partiellement le distributeur.

Optionnellement, le dispositif de pivot comprend au moins un orifice externe supplémentaire relié à une ouverture supplémentaire située dans l'interface de raccordement pour être raccordée à une ouverture supplémentaire de la machine hydraulique située dans l'interface de réception.

Optionnellement, la machine hydraulique est une machine hydraulique à pistons radiaux et à came multilobe.

La conduite de pilotage peut avoir une géométrie simple, par exemple réalisée par usinage. Le sélecteur de cylindrée peut être réalisé dans un encombrement réduit, et être commandé de manière fiable à partir d'un raccord relié au dispositif de pivot au niveau de l'orifice externe de pilotage.

L'exposé sera bien compris et ses avantages apparaîtront mieux à la lecture de la description détaillée qui suit, de modes de réalisation représentés à titre d'exemples non limitatifs. La description se réfère aux dessins annexés sur lesquels :
- la figure 1 est une vue générale en coupe axiale d'un agencement hydraulique selon le présent exposé ;
- la figure 2 est une vue agrandie de la partie II de la figure 1 ;
- la figure 3 est une vue analogue à la figure 1, montrant une variante de réalisation ; et
- la figure 4 est une vue analogue à la figure 2 montrant une autre variante de réalisation.

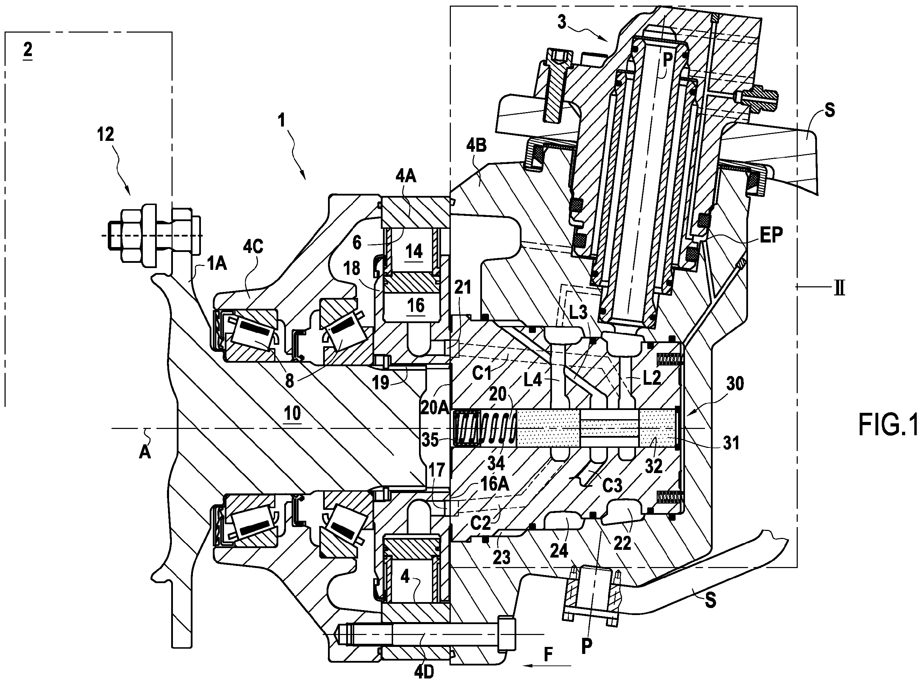

L'agencement représenté sur la figure 1 comprend une machine hydraulique 1 dont la sortie 1A est rotative autour d'un axe de rotation A. Une roue directrice 2 peut être attelée à cette sortie 1A. L'agencement comprend également un dispositif de pivot 3 qui définit un axe de pivotement P de la machine hydraulique. Ce dispositif de pivot 3 est fixé à un support S, tel qu'une partie du bâti ou du châssis d'un véhicule.

En l'espèce, la machine hydraulique est du type à pistons radiaux et à came multilobe. La machine est en particulier un moteur hydraulique. Elle comprend en l'espèce un carter fixe comprenant une partie intermédiaire 4A sur la périphérie interne de laquelle est formée la came multilobe 6, une partie d'extrémité 4B formant un couvercle de distribution avec lequel coopère le dispositif de pivot 3, et une autre partie d'extrémité 4C, située du côté opposé de la partie intermédiaire 4A, dont la périphérie interne coopère avec des paliers 8 pour supporter la rotation d'un arbre rotatif 10 dont l'extrémité opposée au carter forme une bride pour la fixation, par exemple par des écrous 12, à la roue directrice, cette bride formant la sortie 1A de la machine. Les parties 4A, 4B et 4C sont fixées ensemble par des vis 4D. En l'espèce, le support S comprend deux branches sur chacune desquelles est fixée une partie respective du dispositif de pivot, ces parties étant alignées sur l'axe de pivotement P et un partie de carter de la machine (en l'espèce le couvercle de distribution 4B) étant montée entre des deux parties respectives du dispositif de pivot.

La machine comprend un ensemble de pistons 14, qui sont en l'espèce orientés radialement, et qui coulissent dans des cylindres 16 formés dans un bloc-cylindres 18. Les cylindres et les pistons sont orientés radialement par rapport à l'axe de rotation A du rotor. La machine comprend encore un distributeur interne de fluide hydraulique 20 qui est situé dans la partie 4B du carter.

Entre le couvercle de distribution 4B et le distributeur 20 sont ménagées des enceintes principales 22, 24 servant respectivement à l'alimentation et à l'échappement de fluide hydraulique. Classiquement, le distributeur 20 présente des orifices de distribution 21 situés dans une face de distribution radiale 20A pouvant communiquer avec des orifices de communication 17 du bloc-cylindres 18 situés dans une face de communication radiale 16A de ce bloc-cylindres contre laquelle la face de distribution 21 est en appui, par exemple grâce à des ressorts. Les orifices de distribution 21 sont reliés à l'une ou l'autre des enceintes principales 22 et 24 par le distributeur 20, de sorte que la communication entre les orifices de distribution 21 et les orifices de communication 17 met les cylindres en communication avec l'une ou l'autre des enceintes principales 22 et 24.

Dans l'exemple représenté, le stator de la machine hydraulique comprend le carter 4A, 4B, 4C et le distributeur interne de fluide 20, tandis que le rotor comprend l'arbre 10 et le bloc-cylindres 18, auquel l'arbre est accouplé par des cannelures ou analogue 19.

Le distributeur interne de fluide 20 comprend de manière connue en soi des conduits de distribution établissant des liaisons entre les enceintes principales 22 et 24 et les orifices de distribution. En l'espèce, la machine hydraulique est de type à deux cylindrées distinctes de fonctionnement et les conduits de distribution sont répartis en trois groupes, à savoir :
- un premier groupe de conduits C1 reliant en permanence la première enceinte principale 22 à une première série d'orifices de distribution,
- un deuxième groupe de conduits C2 reliant en permanence la deuxième enceinte principale 24 à une deuxième série d'orifices de distribution, et
- un troisième groupe de conduits C3 qui, selon la configuration de cylindrée retenue, sont reliés au premier ou au deuxième groupe.

En l'espèce, une enceinte supplémentaire 23 est ménagée entre le couvercle de distribution 4B et le distributeur 20. Les conduits de distribution du troisième groupe sont reliés en permanence à cette enceinte intermédiaire 23.

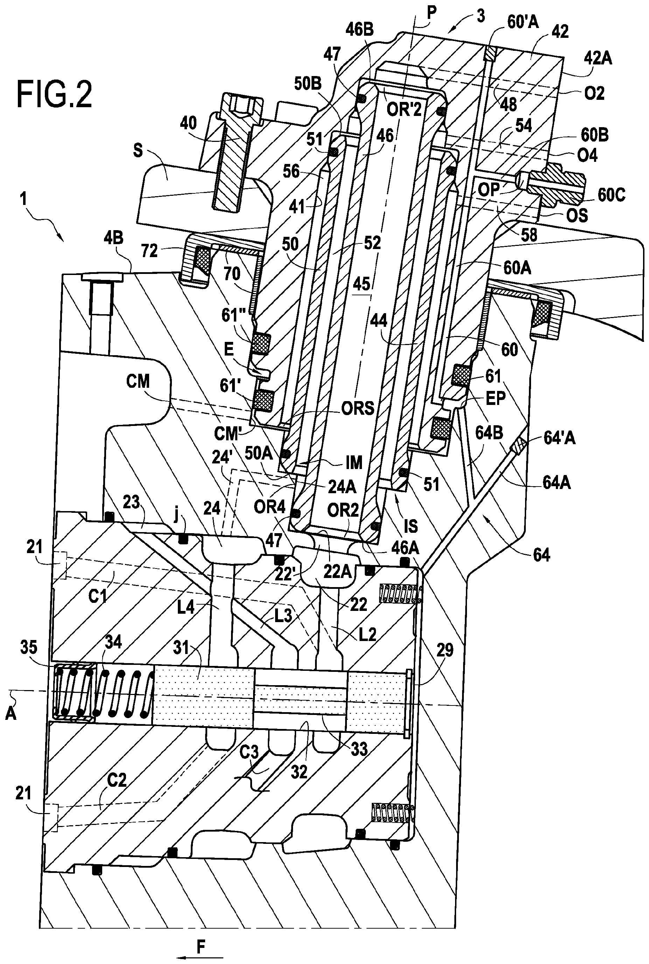

La machine comprend un sélecteur de cylindrée 30 qui comprend en l'espèce un tiroir 31, mobile en translation entre une première position dans laquelle il fait communiquer les enceintes 22 et 23, comme représenté sur les figures 1 et 2, et une deuxième position dans laquelle il fait communiquer les enceintes 24 et 23. En l'espèce, le tiroir 31 est disposé dans un alésage 32 d'axe parallèle à l'axe A de rotation du rotor de la machine, et même confondu avec cet axe. Le tiroir présente une gorge 33 sur sa périphérie externe, et les enceintes 22, 23 et 24 sont reliées à l'alésage par des perçages de liaison, respectivement L2, L3 et L4 qui s'ouvrent dans des tranches axiales successives de l'alésage 32. Dans la position représentée sur les figures 1 et 2, la gorge 33 fait communiquer les conduits de liaison L2 et L3. Le tiroir est maintenu dans cette position par un ressort de rappel 34 prenant appui sur une butée d'extrémité de l'alésage 32, par exemple matérialisée par un bouchon percé 35.

Le tiroir 31 peut être déplacé en sens opposé, à l'encontre de l'effort de rappel exercé par le ressort 34 par l'alimentation en fluide d'une chambre de pilotage hydraulique 29.

En l'espèce, l'alimentation en fluide de cette chambre de pilotage 29 tend à repousser le tiroir 31 dans le sens F indiqué sur la figure 2, pour comprimer le ressort 34 et faire ainsi communiquer les conduits L3 et L4.

Bien entendu, ce qui vient d'être décrit n'est qu'un exemple de sélecteur de cylindrée. En particulier, il n'est pas indispensable que l'alésage du sélecteur soit centré sur l'axe A.

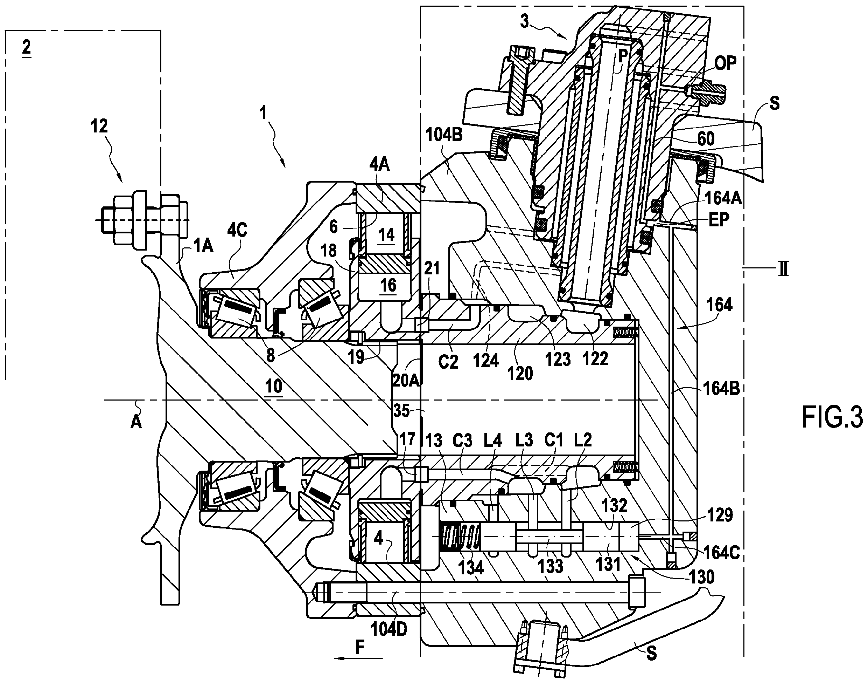

Ainsi le sélecteur de cylindrée 130 de la figure 3 est disposé différemment. Sur cette figure, les éléments inchangés par rapport à la figure 1 sont désignés par les mêmes références, tandis que les éléments correspondant à ceux de la figure 1 mais modifiés sont désignés par des références augmentées de 100. Le couvercle de distribution 104B, fixé aux parties de carter 4A et 4C par des vis 104D, est configuré pour recevoir le sélecteur de cylindrée 130 à l'extérieur du distributeur interne 120.

Les premier, deuxième et troisième groupes C1, C2 et C3 de conduits de distribution sont respectivement reliés en permanence aux enceintes 122, 123 et 124.

Le sélecteur de cylindrée 130 comprend un tiroir 131, mobile en translation entre une première position dans laquelle il fait communiquer les enceintes 122 et 123, comme représenté sur la figure 3, et une deuxième position dans laquelle il fait communiquer les enceintes 124 et 123. Le tiroir 131 est disposé dans un alésage 132 et présente une gorge 133 sur sa périphérie externe. Les enceintes 122, 123 et 124 sont reliées à l'alésage 132 par les perçages de liaison L2, L3 et L4, respectivement. Dans la position représentée sur la figure 3, la gorge 133 fait communiquer les conduits de liaison L2 et L3. Le tiroir est maintenu dans cette position par le ressort 134.

Le tiroir 131 peut être déplacé dans le sens F à l'encontre de l'effort de rappel exercé par le ressort 134, par l'alimentation en fluide de la chambre de pilotage hydraulique 129.

Dans l'exemple décrit, le distributeur comprend trois séries de conduits de distribution. Par exemple, la première enceinte principale 22 ou 122 sert à l'alimentation en fluide tandis que la deuxième enceinte principale 24 ou 124 sert à l'échappement. Ainsi, la somme du nombre de conduits de distribution des premier et troisième groupes C1 et C3 correspond au nombre de conduits de distribution du deuxième groupe C2. On pourrait bien entendu prévoir d'autres situations, par exemple avec quatre groupes de conduits de distribution correspondant deux à deux à des conduits d'alimentation et d'échappement en situation de grande cylindrée. On peut encore prévoir des sélecteurs de cylindrée différents, par exemple du type décrit dans les demandes de brevet français n° FR 3 043 147 ou FR 3 043 433, notamment pour disposer de fonctions de sécurité et/ou avoir plus de deux cylindrées.

Dans l'exemple représenté et décrit dans le présent exposé, le sélecteur de cylindrée est de type à commande hydraulique, c'est-à-dire comprenant une chambre de pilotage hydraulique pouvant être alimentée en fluide de pilotage pour solliciter le sélecteur entre ses différentes configurations pour faire fonctionner la machine hydraulique dans des cylindrées différentes. Ainsi, l'agencement selon le présent exposé comprend une conduite de pilotage et une chambre de pilotage. Bien que, dans l'exemple représenté, cette conduite et cette chambre servent au pilotage d'un sélecteur de cylindrée, elles pourraient servir au pilotage d'un autre composant hydraulique, en particulier un organe de freinage ou de défreinage.

En référence à la figure 2, on s'intéresse maintenant au dispositif de pivot 3 et à son raccordement avec la machine hydraulique. Cette description s'applique également à la variante de la figure 3. Le dispositif de pivot 3 est fixé au support S, par exemple par des vis 40. Ce dispositif définit un axe de pivotement P pour la machine hydraulique et réalise en outre des raccordements hydrauliques pour la machine 1. Plus précisément, le dispositif de pivot comprend deux orifices externes principaux, respectivement 02 et 04 qui sont raccordés aux enceintes principales 22 et 24. Plus précisément, le dispositif de pivot 3 présente une interface de raccordement IS, qui coopère avec une interface de réception IM de la machine hydraulique. En l'espèce, le dispositif de pivot 3 est en partie engagé dans une cavité de la partie 4B du carter de la machine, le fond de cette cavité formant l'interface de réception IM. Le dispositif de pivot 3 comprend des conduits reliant respectivement les orifices externes principaux O2 et O4 à des ouvertures de raccordement respectivement OR2 et OR4 situées dans l'interface de raccordement IS.

Plus précisément, le dispositif de pivot comprend un carter 42 qui présente les orifices externes principaux 02 et 04, et un noyau 44 disposé dans une cavité 41 du carter 42. En l'espèce, le noyau présente la forme de tubes concentriques. Il comprend ainsi un tube interne 46, qui délimite un conduit de liaison 45 et dont une première extrémité 46A située à proximité du distributeur interne 20 délimite l'ouverture de raccordement OR2, et dont l'extrémité externe 46B opposée présente une ouverture OR'2 qui communique avec l'orifice externe 02 par un perçage 48 du carter 42. Le noyau 44 comprend un deuxième tube 50 qui entoure le premier tube 46 en ménageant avec lui un espace annulaire 52 qui met en communication l'orifice externe 04 avec l'ouverture de raccordement OR4. En effet, l'espace annulaire 52 s'ouvre à la première extrémité 50A du tube 50 proche du distributeur sur l'ouverture OR4 et s'ouvre également à l'extrémité opposée 50B du tube 50 sur une partie de la cavité 41 reliée à l'orifice externe 04 par un perçage 54. La paroi de la cavité 41 est étagée au niveau de l'extrémité des tubes et coopère avec leurs extrémités par des joints d'étanchéité respectifs 47, 51 permettant d'isoler fluidiquement les communications entre, d'une part, l'orifice O2 et l'ouverture OR2 et, d'autre part, l'orifice O4 et l'ouverture OR4.

En l'espèce, le carter 42 présente un orifice externe supplémentaire OS relié à une ouverture supplémentaire ORS située dans l'interface de raccordement IS. Comme on le voit mieux sur la figure 2, cette ouverture ORS est reliée à un espace annulaire 56 ménagé entre la périphérie externe du tube 50 et la paroi de la cavité 41 du carter 42, cet espace étant relié, d'une part, à l'orifice externe supplémentaire OS par un perçage 58 du carter 42 et, d'autre part, à un conduit CM de drain de la machine hydraulique.

Les conduits de liaison formés par l'intérieur 45 du tube 46 et les espaces annulaires 52 et 56 forment des conduits de liaison respectifs entre les orifices externes 02, 04 et OS et les ouvertures de raccordement OR2, OR4 et ORS. Ces conduits sont concentriques et parallèles à l'axe P de pivotement du stator.

Les enceintes principales 22 et 24 ont des ouvertures principales respectives, respectivement 22A et 24A, qui sont situées dans l'interface de réception IM. En l'espèce, les enceintes principales 22 et 24 sont formées par des gorges ménagées entre la périphérie externe du distributeur 20 et la périphérie interne du couvercle de distribution 4B et séparées par des joints j. Les ouvertures principales 22A et 24A sont formées aux extrémités, situées dans l'interface de réception IM, de perçages, pratiqués dans le couvercle de distribution 4B et reliant ces ouvertures aux gorges précitées. Lorsque les interfaces de réception IM et de raccordement IS coopèrent entre elles, l'ouverture principale 22A est située en regard de l'ouverture de raccordement OR2 et l'ouverture principale 24A est située en regard de l'ouverture de raccordement OR4. De même, l'ouverture de raccordement ORS est alors située en regard d'une ouverture CM' du conduit CM, ce conduit étant réalisé par un perçage ménagé dans le couvercle de distribution 4B et visant à relier l'espace intérieur du carter de la machine hydraulique à l'ouverture CM' et, par la liaison avec la conduite de liaison 56, à l'orifice externe supplémentaire OS, en particulier pour former un retour de fuites.

Selon l'exposé, la conduite de pilotage servant à l'alimentation de la chambre de pilotage 29 ou 129 est formée dans le dispositif de pivot 3. Plus précisément, ce dispositif présente un orifice externe de pilotage OP qui est relié, par la conduite de pilotage 60, à une ouverture de pilotage 61 située dans l'interface de raccordement IS. En l'espèce, la conduite de pilotage 60 est formée dans la paroi du carter 42 et l'ouverture de pilotage 61 est située dans une partie de la surface externe de ce carter qui est située dans l'interface de raccordement IS. En l'espèce, cette ouverture 61 est délimitée dans une gorge de la paroi externe et la partie du carter 42 qui est engagée dans le couvercle de distribution, est située au niveau d'un étagement E de la cavité de ce couvercle dans laquelle est engagé le dispositif de pivot. Cette gorge qui présente l'ouverture 61 est délimitée entre deux joints 61', 61".

En l'espèce, la conduite de pilotage 60 comprend un tronçon axial 60A, qui est parallèle à l'axe de pivotement P du stator et qui, étant pratiqué à partir d'une face externe du carter 42, est fermé par un bouchon 60'A rapporté au niveau de cette face. Ce tronçon s'étend axialement jusqu'à la gorge précitée dans laquelle se trouve l'ouverture 61. Cependant, l'orifice externe de pilotage OP est formé dans une face externe du carter 42 du dispositif de pivot qui s'étend sensiblement axialement, sur une face latérale de ce dispositif. La conduite de pilotage 60 comprend un tronçon de liaison 60B reliant le tronçon axial 60A à cette face. En l'espèce, on a représenté un connecteur 60C vissé dans l'ouverture OP, pour le raccordement de la conduite de pilotage avec une conduite d'alimentation en fluide. De tels connecteurs peuvent évidemment être prévus pour les orifices externes 02, 04 et OS.

Pour la clarté du dessin, on a représenté la conduite de pilotage 60 dans le plan de coupe de la figure 2 qui passe par l'axe P du dispositif de pivot et l'axe A de rotation de la machine hydraulique. Ceci n'est cependant bien entendu pas nécessairement le cas. En particulier, les différents orifices 02, 04, OP et, lorsqu'il est présent OS, peuvent être répartis sur la face 42A du carter 42 du dispositif de pivot de manière à permettre des raccords aisés dans un encombrement adapté.

La chambre de pilotage 29 ou 129 a une entrée de pilotage EP située dans l'interface de réception IM. En l'espèce, la chambre de pilotage est formée vers le fond du couvercle de distribution 4B (opposé au bloc-cylindres 18 de la machine hydraulique), et est reliée à cette entrée de pilotage EP par une conduite de liaison de pilotage pratiquée dans le couvercle de distribution. Pour la praticité de l'usinage, cette conduite de liaison de pilotage peut être formée par des tronçons rectilignes. Ainsi, la conduite de liaison de pilotage 64 représentée sur la figure 2 comprend un premier tronçon 64A qui relie la chambre de pilotage 29 à une surface externe du couvercle de distribution 4B au niveau de laquelle il est obturé par un bouchon 64'A, et un deuxième tronçon 64B qui relie le tronçon 64A à l'entrée de pilotage EP, laquelle est située dans une portion en épaulement de la paroi de la cavité du couvercle de distribution formant l'interface de réception. Ainsi, la conduite de liaison de pilotage 64 est ménagée dans le stator de la machine hydraulique. La conduite de liaison de pilotage 164 de la figure 3 comprend les tronçons rectilignes 164A, 164B et 164C dont les extrémités situés à la surface externe du couvercle de distribution 104B sont fermées par des bouchons.

Selon le présent exposé, les orifices externes 02, 04 et OP ainsi que, s'il est présent, l'orifice externe OS, sont regroupés dans une même face du carter 42 du dispositif de pivot, cette face étant aisément accessible pour la tuyauterie et protégée vis-à-vis des mouvements de pivotement de la machine hydraulique.

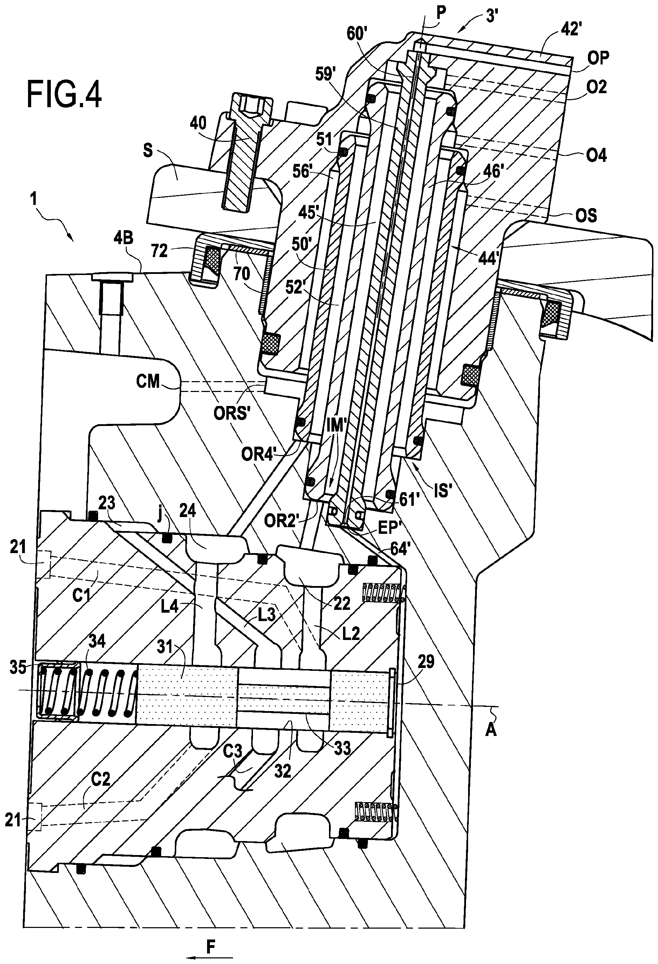

Sur les figures 1 à 3, la conduite de pilotage 60 est formée dans la paroi du carter 42. Dans la mesure où un débit de fluide important n'est pas nécessaire pour piloter le sélecteur de cylindrée 30, la section de la conduite de pilotage peut être faible, ce qui est compatible avec ce type de perçage. On pourrait toutefois choisir de réaliser la conduite de pilotage de manière différente, par exemple en rajoutant un troisième tube concentrique avec les tubes 46 et 50 pour former le noyau du dispositif de pivot 3. Ainsi, sur la figure 4, le noyau 44' du dispositif de pivot 3' comprend un premier tube 46' et un deuxième tube 50' qui sont analogues aux tubes 46 et 50, ainsi qu'un troisième tube 59', qui est concentrique aux tubes 46' et 50', en étant en l'espèce disposé à l'intérieur du tube 46'. Les espaces annulaires 45' et 52', situés entre les tubes 46' et 59' et entre les tubes 50' et 46', respectivement, forment des conduits de liaison respectifs entre l'orifice externe principal 02, respectivement 04, et l'ouverture OR2', respectivement OR4', située dans l'interface de raccordement IS'. L'espace annulaire 56' entre le tube 50' et la paroi du carter 42' forme un conduit de liaison entre l'orifice externe OS et l'ouverture supplémentaire ORS' vers un conduit de drain CM. Les ouvertures OR2' et OR4' sont reliées aux enceintes principales 22 et 24 comme sur la figure 2. Le canal interne 60' du tube 59' forme une conduite de pilotage qui s'étend entre l'orifice externe de pilotage OP et l'ouverture de pilotage 61' située dans l'interface IS'. Cette conduite de pilotage 60' communique, via l'entrée de pilotage EP' située dans l'interface de réception IM', avec la conduite de liaison de pilotage 64' reliée à la chambre de pilotage 29. Bien entendu, parmi les composants du noyau 44', le tube qui sert à définir la conduite de pilotage peut être le tube le plus interne, comme représenté, ou bien l'un des autres tubes de l'agencement de tubes concentriques.

Le dispositif de pivot 3 forme un joint tournant qui est fixe par rapport au support S, forme l'axe de pivotement P et établit les raccordements hydrauliques nécessaires non seulement au fonctionnement de la machine hydraulique, mais également à la sélection de sa cylindrée.

En l'espèce, le dispositif de pivot se projette, au niveau de l'interface de raccordement, à l'intérieur du stator de la machine hydraulique, en pénétrant dans une cavité de ce stator. On pourrait bien entendu imaginer une dispersion inversée.

La gorge dans laquelle se trouve l'ouverture de pilotage 61, de même que les gorges dans lesquelles se trouvent les ouvertures OR2, OR4 et ORS s'étendent sur une plage angulaire permettant la communication avec, respectivement, les ouvertures EP, 22A, 22B et CM4 situées dans l'interface de réception IM sur toute l'amplitude de pivotement de la machine hydraulique autour de l'axe de pivotement P. Ces gorges peuvent être annulaires.

Le stator est guidé dans son pivotement par rapport au dispositif de pivot par des coussins anti-frottements 70 formant également palier, et retenus par une bague 70.

Les conduits 48, 58, 54, 58, 64A et 64B sont présentés comme étant réalisés par perçage. Bien entendu, il ne s'agit que d'un exemple. Ces conduits peuvent également être issues de fonderie / moulage. De plus le conduit 54 A peut avoir une partie traversant le distributeur 20, dans le cas où la chambre de pilotage 29 ou 129 est intégralement logée dans le distributeur.

## Revendications

1. Agencement hydraulique pour une roue directrice (2) d'un véhicule, comprenant :
- une machine hydraulique (1), qui comprend une partie de rotor (10) configurée pour être raccordée à la roue directrice, une partie de stator (4A, 4B, 4C, 20) qui présente deux enceintes principales (22, 24) ayant des ouvertures principales (22A, 24A) respectives situées dans une interface de réception (IM ; IM'), un ensemble de pistons (14) coulissant dans des cylindres (16) pour entraîner en rotation la partie de rotor, et un distributeur de fluide (20) configuré pour établir des liaisons sélectives entre les enceintes principales (22, 24) et les cylindres (16),
- un dispositif de pivot (3 ; 3') qui définit un axe de pivotement (P) du stator, qui présente deux orifices externes principaux (02, 04) reliés à des ouvertures de raccordement (OR2, OR4 ; OR2', OR4') respectives situées dans une interface de raccordement (IS ; IS') et qui est configuré pour être fixé à un support (S) en étant relié au stator de la machine hydraulique (1) de sorte que les interfaces de réception (IM ; IM') et de raccordement (IS ; IS') coopèrent en reliant les ouvertures principales respectives et les ouvertures de raccordement respectives,
**caractérisé en ce qu'**il comprend une conduite de pilotage (60 ; 60') reliée à une chambre de pilotage (29 ; 129) et **en ce que** la chambre de pilotage (29 ; 129) a une entrée de pilotage (EP ; EP') dans l'interface de réception (IM ; IM') et la conduite de pilotage (60 ; 60') est formée dans le dispositif de pivot (3 ; 3') et s'étend entre un orifice externe de pilotage (OP) que présente le dispositif de pivot et une ouverture de pilotage (61 ; 61') située dans l'interface de raccordement (IS ; IS'), l'ouverture de pilotage étant reliée à l'entrée de pilotage par la coopération des interfaces de raccordement et de réception.

2. Agencement selon la revendication 1, dans lequel la machine hydraulique comprend un sélecteur de cylindrée (30 ; 130) apte à être commandé via la chambre de pilotage (29 ; 129) entre au moins deux configurations de cylindrées différentes dans lesquelles les liaisons établies par le distributeur diffèrent.

3. Agencement selon la revendication 1, dans lequel le dispositif de pivot (3 ; 3') comprend un carter (42 ; 42') qui présente les orifices externes principaux (O2, O4) et de pilotage et un noyau (44, 44'), qui est disposé dans le carter, le carter et le noyau coopérant pour définir des conduits de liaison (45, 52 ; 45', 52') respectifs entre les orifices externes principaux (O2, O4) et les ouvertures de raccordement (OR2, OR4 ; OR2', OR4').

4. Agencement selon la revendication 3, dans lequel la conduite de pilotage (60) est formée dans la paroi du carter (3) et l'ouverture de pilotage (61) est située dans une surface dudit carter dans l'interface de raccordement (IS).

5. Agencement selon la revendication 3, dans lequel la conduite de pilotage (60') est formée dans une partie du noyau (44').

6. Agencement selon l'une quelconque des revendications 1 à 5, dans lequel l'ouverture de pilotage (61) est située dans une gorge, s'étendant selon au moins une portion d'anneau et située dans l'interface de raccordement (IS).

7. Agencement selon la revendication 6, dans lequel l'entrée de pilotage (EP) est située dans un étagement de l'interface de réception (IM).

8. Agencement selon l'une quelconque des revendications 1 à 7, dans lequel la chambre de pilotage (29 ; 129) est reliée à l'entrée de pilotage (EP ; EP') par une conduite de liaison de pilotage (64 ; 64' ; 164') ménagée dans le stator.

9. Agencement selon l'une quelconque des revendications 1 à 8, dans lequel la conduite de pilotage (60 ; 60') comprend un tronçon axial (60A ; 60') sensiblement parallèle à l'axe de pivotement (P) du stator, ledit tronçon axial étant optionnellement formé par un perçage traversant bouché à son extrémité opposée à l'interface de raccordement par un bouchon rapporté (60'A).

10. Agencement selon l'une quelconque des revendications 1 à 9, prise en combinaison avec la revendication 2, dans lequel le sélecteur de cylindrée (30 ; 130) comprend un tiroir (31 ; 131) mobile dans un alésage (32 ; 132) de la partie de stator, avec lequel communique la chambre de pilotage (29 ; 129), ce tiroir étant configuré pour être déplacé dans un premier sens lorsque la pression dans la chambre de pilotage augmente à l'encontre d'un moyen de rappel (35 ; 135), sollicitant le tiroir en sens opposé.

11. Agencement selon la revendication 10, dans lequel le tiroir (31) est disposé dans le distributeur de fluide (20) et, optionnellement, l'axe de translation du tiroir coïncide avec l'axe de rotation (A) de la partie de rotor de la machine hydraulique.

12. Agencement selon la revendication 10, dans lequel le tiroir (131) est disposé dans une partie de carter (104B) de la machine hydraulique.

13. Agencement selon l'une quelconque des revendications 1 à 12, dans lequel le dispositif de pivot comprend au moins un orifice externe supplémentaire (OS) relié à une ouverture supplémentaire (ORS ; ORS') située dans l'interface de raccordement (IS ; IS') pour être raccordée à une ouverture supplémentaire de la machine hydraulique située dans l'interface de réception (IM ; IM').

14. Agencement selon l'une quelconque des revendications précédentes, dans lequel la machine hydraulique (1) est une machine hydraulique à pistons radiaux (14) et à came multilobe (6).

## Patentansprüche

1. Hydraulische Anordnung für ein gelenktes Rad (2) eines Fahrzeugs, umfassend:
- eine hydraulische Maschine (1), die einen Rotorteil (10), welcher dazu ausgelegt ist, mit dem gelenkten Rad verbunden zu werden, einen Statorteil (4A, 4B, 4C, 20), welcher zwei Hauptgehäuse (22, 24) mit jeweiligen Hauptöffnungen (22A, 24A) aufweist, die in einer Aufnahmeschnittstelle (IM; IM') gelegen sind, eine Anordnung von Kolben (14), welche in Zylindern (16) gleiten, um den Rotorteil drehanzutreiben, sowie einen Fluidverteiler (20) umfasst, der dazu ausgelegt ist, selektive Verbindungen zwischen den Hauptgehäusen (22, 24) und den Zylindern (16) herzustellen,
- eine Schwenkvorrichtung (3; 3'), die eine Schwenkachse (P) des Stators definiert, die zwei äußere Hauptöffnungen (O2, O4) aufweist, welche mit jeweiligen in einer Verbindungsschnittstelle (IS; IS') gelegenen Verbindungsöffnungen (OR2, OR4; OR2', OR4') verbunden sind, und die dazu ausgelegt ist, an einem Träger (S) dadurch befestigt zu werden, dass sie mit dem Stator der hydraulischen Maschine (1) verbunden wird, so dass die Aufnahmeschnittstelle (IM; IM') und die Verbindungsschnittstelle (IS; IS') dadurch zusammenwirken, dass sie die jeweiligen Hauptöffnungen und die jeweiligen Verbindungsöffnungen verbinden,
**dadurch gekennzeichnet, dass** sie eine Steuerleitung (60; 60') umfasst, die mit einer Steuerkammer (29; 129) verbunden ist, und dass die Steuerkammer (29; 129) einen Steuereingang (EP; EP') in der Aufnahmeschnittstelle (IM; IM') aufweist und die Steuerleitung (60; 60') in der Schwenkvorrichtung (3; 3') ausgebildet ist und sich zwischen einer äußeren Steueröffnung (OP), welche die Schwenkvorrichtung aufweist, und einer Steueröffnung (61; 61'), welche in der Verbindungsschnittstelle (IS; IS') gelegen ist, erstreckt, wobei die Steueröffnung durch das Zusammenwirken der Verbindungs- und der Aufnahmeschnittstellen mit dem Steuereingang verbunden ist.

2. Anordnung nach Anspruch 1, **dadurch gekennzeichnet, dass** die hydraulische Maschine einen Hubraumwähler (30; 130) aufweist, der geeignet ist, über die Steuerkammer (29; 129) zwischen wenigstens zwei unterschiedlichen Hubraumkonfigurationen gesteuert zu werden, in denen sich die durch den Verteiler hergestellten Verbindungen unterscheiden.

3. Anordnung nach Anspruch 1, bei der die Schwenkvorrichtung (3; 3') ein Gehäuse (42; 42'), das die äußeren Haupt- (O2, O4) und Steueröffnungen aufweist, sowie einen Kern (44, 44') umfasst, der in dem Gehäuse angeordnet ist, wobei das Gehäuse und der Kern zusammenwirken, um jeweilige Verbindungsleitungen (45, 52; 45', 52') zwischen den äußeren Hauptöffnungen (O2, O4) und den Verbindungsöffnungen (OR2, OR4; OR2', OR4') zu definieren.

4. Anordnung nach Anspruch 3, bei der die Steuerleitung (60) in der Wand des Gehäuses (3) ausgebildet ist und sich die Steueröffnung (61) in einer Oberfläche des Gehäuses in der Verbindungsschnittstelle (IS) befindet.

5. Anordnung nach Anspruch 3, bei der die Steuerleitung (60') in einem Teil des Kerns (44') ausgebildet ist.

6. Anordnung nach einem der Ansprüche 1 bis 5, bei der sich die Steueröffnung (61) in einer Nut befindet, die sich entlang wenigstens eines Ringabschnitts erstreckt und sich in der Verbindungsschnittstelle (IS) befindet.

7. Anordnung nach Anspruch 6, bei der sich der Steuereingang (EP) in einer Abstufung der Aufnahmeschnittstelle (IM) befindet.

8. Anordnung nach einem der Ansprüche 1 bis 7, bei der die Steuerkammer (29; 129) mit dem Steuereingang (EP; EP') durch eine Steuerverbindungsleitung (64; 64; 164'), welche in dem Stator ausgebildet ist, verbunden ist.

9. Anordnung nach einem der Ansprüche 1 bis 8, bei der die Steuerleitung (60; 60') einen axialen Abschnitt (60A; 60') umfasst, der im Wesentlichen parallel zu der Schwenkachse (P) des Stators verläuft, wobei der axiale Abschnitt optional durch eine Durchgangsbohrung gebildet ist, die an ihrem der Verbindungsschnittstelle gegenüberliegenden Ende durch einen aufgesetzten Stopfen (60'A) verschlossen ist.

10. Anordnung nach einem der Ansprüche 1 bis 9, in Kombination mit Anspruch 2, bei der der Hubraumwähler (30; 130) einen in einer Bohrung (32; 132) des Statorteils beweglichen Schieber (31; 131) umfasst, mit dem die Steuerkammer (29; 129) in Verbindung steht, wobei dieser Schieber dazu ausgelegt ist, in eine erste Richtung bewegt zu werden, wenn der Druck in der Steuerkammer entgegen einem Rückstellmittel (35; 135) zunimmt, das den Schieber in die entgegengesetzte Richtung beaufschlagt.

11. Anordnung nach Anspruch 10, bei der der Schieber (31) in dem Fluidverteiler (20) angeordnet ist und optional die Translationsachse des Schiebers mit der Rotationsachse (A) des Rotorteils der hydraulischen Maschine zusammenfällt.

12. Anordnung nach Anspruch 10, bei der der Schieber (131) in einem Gehäuseteil (104B) der hydraulischen Maschine angeordnet ist.

13. Anordnung nach einem der Ansprüche 1 bis 12, bei der die Schwenkvorrichtung wenigstens eine zusätzliche äußere Öffnung (OS) umfasst, die mit einer zusätzlichen Öffnung (ORS; ORS') verbunden ist, welche sich in der Verbindungsschnittstelle (IS; IS') befindet, um mit einer zusätzlichen Öffnung der hydraulischen Maschine verbunden zu werden, die sich in der Aufnahmeschnittstelle (IM; IM') befindet.

14. Anordnung nach einem der vorhergehenden Ansprüche, bei der die hydraulische Maschine (1) eine hydraulische Maschine mit Radialkolben (14) und mit mehrlappigem Nocken (6) ist.

## Claims

1. A hydraulic arrangement for a steered wheel (2) of a vehicle, comprising:
- a hydraulic machine (1) which comprises a rotor part (10) configured to be connected to the steered wheel, a stator part (4A, 4B, 4C, 20) which has two main enclosures (22, 24) having respective main openings (22A, 24A) located in a receiving interface (IM; IM'), a set of pistons (14) sliding in cylinders (16) to drive in rotation the rotor part, and a fluid distributor (20) configured to establish selective links between the main enclosures (22, 24) and the cylinders (16),
- a pivot device (3; 3') which defines a pivot axis (P) of the stator, which has two main outer orifices (02, 04) linked to respective connection openings (OR2, OR4; OR2', OR4') located in a connection interface (IS; IS') and which is configured to be fixed to a support (S) by being linked to the stator of the hydraulic machine (1) so that the receiving (IM; IM') and connection (IS; IS') interfaces cooperate by linking the respective main openings and the respective connection openings, **characterized in that** it comprises a pilot line (60; 60') linked to a pilot chamber (29; 129) and **in that** the pilot chamber (29; 129) has a pilot inlet (EP; EP') located in the receiving interface (IM; IM') and the pilot line (60; 60') is formed in the pivot device (3; 3') and extends between an outer pilot orifice (OP) present in the pivot device and a pilot opening (61; 61') located in the connection interface (IS; IS'), the pilot opening being linked to the pilot inlet by the cooperation of the connection and receiving interfaces.

2. The arrangement according to claim 1, wherein the hydraulic machine comprises a displacement selector (30; 130) able to be controlled via the pilot chamber (29; 129) between at least two different displacement configurations in which the links established by the distributor differ.

3. The arrangement according to claim 1, wherein the pivot device (3; 3') comprises a casing (42; 42') which has the main outer orifice (02, 04) and the pilot orifice and a core (44, 44'), which is disposed in the casing, the casing and the core cooperating to define respective linking ducts (45, 52; 45', 52') between the main outer orifices (02, 04) and the connection openings (OR2, OR4; OR2', OR4').

4. The arrangement according to claim 3, wherein the pilot line (60) is formed in the wall of the casing (3) and the pilot opening (61) is located in a surface of said casing in the connection interface (IS).

5. The arrangement according to claim 3, wherein the pilot line (60') is formed in a part of the core (44').

6. The arrangement according to any one of claims 1 to 5, wherein the pilot opening (61) is located in a groove, extending along at least one ring portion and located in the connection interface (IS).

7. The arrangement according to claim 6, wherein the pilot inlet (EP) is located in a staging of the receiving interface (IM).

8. The arrangement according to any one of claims 1 to 7, wherein the pilot chamber (29; 129) is linked to the pilot inlet (EP; EP') by a linking pilot line (64; 64'; 164') arranged in the stator.

9. The arrangement according to any one of claims 1 to 8, wherein the pilot line (60; 60') comprises an axial segment (60A; 60') substantially parallel to the pivot axis (P) of the stator, said axial segment being optionally formed by a through bore plugged at its end opposite to the connection interface by an added plug (60'A).

10. The arrangement according to any one of claims 1 to 9, taken in combination with claim 2, wherein the displacement selector (30; 130) comprises a spool (31; 131) movable in a bore (32; 132) of the stator part, with which the pilot chamber (29; 129) communicates, this spool being configured to be moved in a first direction when the pressure in the pilot chamber increases against a return means (35; 135), urging the spool in the opposite direction.

11. The arrangement according to claim 10, wherein the spool (31) is disposed in the fluid distributor (20) and, optionally, the axis of translation of the spool coincides with the axis of rotation (A) of the rotor part of the hydraulic machine.

12. The arrangement according to claim 10, wherein the spool (131) is disposed in a casing part (104B) of the hydraulic machine.

13. The arrangement according to any one of claims 1 to 12, wherein the pivot device comprises at least one additional outer orifice (OS) linked to an additional opening (ORS; ORS') located in the connection interface (IS; IS') to be connected to an additional opening of the hydraulic machine located in the receiving interface (IM; IM').

14. The arrangement according to any one of the preceding claims, wherein the hydraulic machine (1) is a radial-piston (14) and multilobe cam (6) hydraulic machine.
